(19) Europäisches Patentamt
European Patent Office
Office européen des brevets

(11) **EP 3 950 580 A1**

(12) **EUROPEAN PATENT APPLICATION**
published in accordance with Art. 153(4) EPC

(43) Date of publication:
**09.02.2022 Bulletin 2022/06**

(21) Application number: **19922375.1**

(22) Date of filing: **29.03.2019**

(51) International Patent Classification (IPC):
**C01B 13/10** [(2006.01)]

(52) Cooperative Patent Classification (CPC):
**C01B 13/10**

(86) International application number:
**PCT/JP2019/014057**

(87) International publication number:
**WO 2020/202271 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **MATSUURA, Yoko**
**Tokyo 100-8310 (JP)**
• **WADA, Noboru**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **OZONE SUPPLYING DEVICE AND OZONE SUPPLYING METHOD**

(57) A high concentration of ozone, which remains at the time of a former supply process, is leaked out and is discarded, at the time of a following adsorption process. For this reason, an ozone supply apparatus is provided with a first adsorption - desorption tower (3a) and a second adsorption - desorption tower (3b), a gas circuit of exhaust use (R0) which discharges a gas, that is discharged from the first adsorption - desorption tower (3a), to the outside of the ozone supply apparatus, a gas circuit of adsorption recovery use (R1) which discharges a gas discharged from the first adsorption - desorption tower (3 a) to the outside portion of the ozone supply apparatus, after passing the gas through the second adsorption - desorption tower (3b), a circuit switching device (5) which switches a flow path of the gas circuit of exhaust use (R0) and the gas circuit of adsorption recovery use (R1), and a control part (6) which controls an opening and closing of the circuit switching device (5), according to a state of the first adsorption - desorption tower (3a) and a state of the second adsorption - desorption tower (3b).

FIG. 1

**Description**

Field of the Invention

This application relates to an ozone supply apparatus and an ozone supply method.

Background of the Invention

Ozone is used as a powerful oxidizer in broad fields, such as the clean-up of water environment and the washing of semiconductors. Ozone is generated with an ozone generating apparatus, whose upper limit value of a concentration of ozone is about 20 % in volume fraction. For this reason, using an adsorption - desorption tower in which adsorbent is filled up, adsorption, concentration, and desorption are conducted on a mixed gas ( oxygen and ozone ), which is produced in an ozone generating apparatus, to obtain a high concentration of ozone.

In an ozone supply apparatus, it is desired that the apparatus has the capability to control and change the quantity of ozone which is supplied to an ozone supply target. On the other hand, in an ozone using side ( demand side ), for example, in the treatment of waste water, the inlet flow rate and water quality of the waste water which flows thereinto varies generally from hour to hour. Therefore, the optimal supply quantity of ozone which is required for the treatment of waste water varies also from hour to hour.

Accordingly, in a case where a fixed quantity of ozone is supplied, there arises a case in which the supply quantity of ozone becomes too much or too little, with respect to the amount of waste water for treatment. If excessive amount of ozone is supplied, the processing of waste water becomes uneconomical, and if too little amount of ozone is supplied, it is likely that the processing of waste water may become insufficient. Therefore, in an ozone supply apparatus, it is required that the apparatus is capable of controlling the supply quantity to be in accordance with the variation of the ozone demanded.

However, in an ozone suppling side, it is required to manufacture ozone efficiently and supply the ozone stably. Therefore, a technology (Patent Document 1 ) is proposed as an existing technology, in which there are provided with a plurality of adsorption - desorption towers, a circulation piping for returning a gas to an ozone generator, where ozone included in the gas is adsorbed in an adsorption - desorption tower, and an ozone discharge means for taking out ozone from the adsorption - desorption tower. When ozone is adsorbed for storing, ozone which is leaked out from the adsorption - desorption tower is recovered by adsorption in another adsorption - desorption tower. Thereby, the technology enables the use of ozone which is discarded at the time of adsorption.

Citation List

Patent Literature

Patent Document 1 : JP H09 - 235104 A

Summary of the Invention

Technical Problem

However, according to the conventional technology, an adsorption - desorption tower, from which ozone is supplied, will be used at the next cycle, as a tower of adsorption recovery use. Thereby, a high concentration of ozone, which remains at the time of preforming a process for supplying former ozone, is pushed out to the exit of the adsorption - desorption tower, by oxygen and a low concentration of ozone which are introduced into the adsorption - desorption tower, in the beginning stage of an adsorption process, and is forced to leak out from the adsorption - desorption tower. For these reasons, a high concentration of ozone is discarded, the ratio of ozone manufactured to ozone used effectively (utilization rate of ozone) is lowered, and there arises a problem that the running cost of the apparatus increases.

The present invention is the one to disclose a technology for solving the subjects mentioned above, and aims at offering an ozone supply apparatus and an ozone supply method, which are capable of realizing an improvement in the utilization rate of ozone.

Solution to the Problem

The present invention discloses an ozone supply apparatus which condenses and supplies an ozone gas by a first adsorption - desorption tower and a second adsorption - desorption tower in which an adsorbent is stored, wherein the ozone supply apparatus includes:

- a gas circuit of exhaust use which discharges a gas discharged from the first adsorption-desorption tower, to an outside of the ozone supply apparatus,
- a gas circuit of adsorption recovery use, unlike the gas circuit of exhaust use, which passes a gas discharged from the first adsorption - desorption tower, through the second adsorption - desorption tower, and then, discharges the gas to an outside portion of the ozone supply apparatus,
- a circuit switching device which switches a flow path of the gas circuit of exhaust use and the gas circuit of adsorption recovery use, and
- a control part which controls an opening and closing of the circuit switching device, according to a state of the first adsorption - desorption tower and a state of the second adsorption - desorption tower.

Advantageous Effects of the Invention

In the present invention, the ozone supply apparatus is configured to control and decide whether ozone gas of the first adsorption - desorption tower is exhausted or passed to the second adsorption - desorption tower, according to the result of comparison, which is made between the state of the first adsorption - desorption tower and the state of the second adsorption - desorption tower. Thereby, it becomes possible to restrain the leakage out of a high concentration of ozone gas, which is produced in the adsorption process of the first adsorption - desorption tower, and remains at the time of a supply process, and improvement in the utilization rate of ozone can be realized.

Brief Explanation of Drawings

FIG. 1 is a configuration diagram showing an ozone supply apparatus in accordance with Embodiment 1.

FIG. 2 is a gas circuit diagram for showing a path in a first adsorption process of the ozone supply apparatus according to the Embodiment 1, where a gas is discharged from a first adsorption - desorption tower to an outside of the ozone supply apparatus.

FIG. 3 is a gas circuit diagram for showing a path in the first adsorption process of the ozone supply apparatus according to the Embodiment 1, where a gas which is discharged from the first adsorption - desorption tower passes through a second adsorption - desorption tower, and then, is discharged to an outside portion of the ozone supply apparatus.

FIG. 4 is a gas circuit diagram for showing a path in the first supply process of the ozone supply apparatus according to the Embodiment 1, where a gas is supplied from the first adsorption - desorption tower to a supply target.

FIG. 5 is a gas circuit diagram for showing a path in a second adsorption process of the ozone supply apparatus according to the Embodiment 1, where a gas which is discharged from the first adsorption - desorption tower is discharged to the outside of the ozone supply apparatus.

FIG. 6 is a gas circuit diagram for showing a path in the second adsorption process of the ozone supply apparatus according to the Embodiment 1, where a gas which is discharged from the first adsorption - desorption tower passes through the second adsorption - desorption tower, and then, is discharged to the outside of the ozone supply apparatus.

FIG. 7 is a gas circuit diagram for showing a path in the second supply process of the ozone supply apparatus according to the Embodiment 1, where a gas is supplied to a supply target from the first adsorption - desorption tower.

FIG. 8 is a characteristic diagram for showing the change with the passage of time in the concentration of ozone of an ozonized gas which is discharged to the outside, in the adsorption process of the ozone supply apparatus according to the Embodiment 1, where the diagram is compared with that of Comparative Example 1.

FIG. 9 is a characteristic diagram for showing the change with the passage of time in the concentration of ozone of an ozonized gas which is discharged to the outside, in the adsorption process of the ozone supply apparatus according to the Embodiment 1, where the diagram is compared with that of Comparative Example 2.

FIG. 10 is a characteristic diagram for showing the change with the passage of time in the concentration of ozone of an ozonized gas which is discharged to the outside, in the adsorption process of Improved example of the ozone supply apparatus according to the Embodiment 1, where the diagram is compared with that of the ozone supply apparatus according to the Embodiment 1.

FIG. 11 is a configuration diagram for showing an ozone supply apparatus in accordance with Embodiment 2.

FIG. 12 is a configuration diagram for showing an ozone supply apparatus in accordance with Embodiment 3.

FIG. 13 is a configuration diagram for showing an ozone supply apparatus in accordance with Embodiment 4.

FIG. 14 is a block diagram for showing the configuration of a control part according to the Embodiments.

Description of Embodiments

Embodiment 1 .

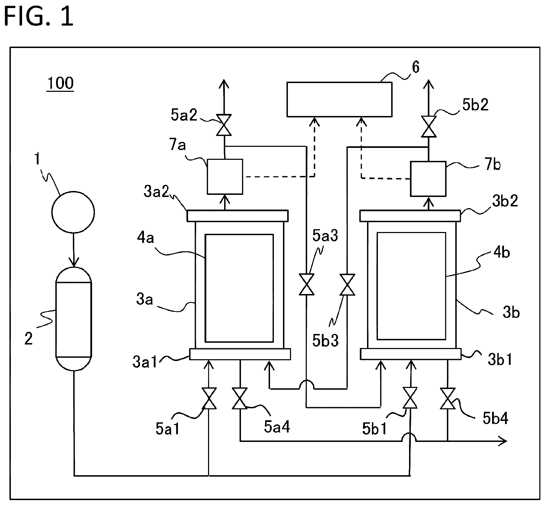

FIG. 1 is a configuration diagram for showing an ozone supply apparatus according to the Embodiment 1 of the present invention. The ozone supply apparatus 100 according to the Embodiment 1 is equipped with a gaseous material source 1, an ozone generating portion 2, a first adsorption - desorption tower 3a, and a second adsorption - desorption tower 3b. On the inside of the first adsorption - desorption tower 3a and the second adsorption - desorption tower 3b, an adsorbent 4a and an adsorbent 4b are filled up respectively.

A plurality of gas circuits is provided for distributing the flow of a gas; one is between the ozone generating portion 2 and the first adsorption - desorption tower 3a, another is between the ozone generating portion 2 and the second adsorption - desorption tower 3b, and the other is between the first adsorption - desorption tower 3a and the second adsorption - desorption tower 3b. In each of the gas circuits, a circuit switching device 5 is provided. The opening and closing of this circuit switching device 5 is controlled by a control part 6.

The control part 6 conducts a control operation based on a measured value which is measured with the first concentration measurement part 7a and a measured value which is measured with the second concentration measurement part 7b. It is to be noted that, a signal wire from the control part 6 to the circuit switching device 5 is omitted from displaying in the drawing.

The circuit switching device 5 can selectively form a gas circuit of exhaust use R0a and a gas circuit of exhaust use R0b, a gas circuit of adsorption recovery use R1a and a gas circuit of adsorption recovery use R1b, and a gas circuit of supply use R2a and a gas circuit of supply use R2b, by conducting an opening and closing of a gas circuit which is installed in order to connect between components.

Here, a circuit switching device which is installed on the way of the gas circuit which connects the ozone generating portion 2 and the first gateway 3a1 of the first adsorption-desorption tower 3a is referred to as a first circuit switching device 5a1; a circuit switching device which is installed on the way of a gas circuit which connects the ozone generating portion 2 and the first gateway 3b 1 of the second adsorption - desorption tower 3b is referred to as a fifth circuit switching device 5b 1; a circuit switching device which is installed on the way of a gas circuit which is opened to the outside from the first concentration measurement part 7a is referred to as a second circuit switching device 5a2; a circuit switching device which is installed on the way of a gas circuit which is opened to the outside from the second concentration measurement part 7b is referred to as a sixth circuit switching device 5b2; a circuit switching device which is installed on the way of a gas circuit which connects from the first concentration measurement part 7a to the second adsorption - desorption tower 3b is referred to as a third circuit switching device 5a3; a circuit switching device which is installed on the way of a gas circuit which connects from the second concentration measurement part 7b to the first adsorption-desorption tower 3a is referred to as a seventh circuit switching device 5b3; a circuit switching device which is installed on the way of a gas circuit which is opened to the outside from the first gateway 3a1 of the first adsorption - desorption tower 3a is referred to as a fourth circuit switching device 5a4; and a circuit switching device which is installed on the way of a gas circuit which is opened to the outside from the first gateway 3b 1 of the second adsorption - desorption tower 3b is referred to as an eighth circuit switching device 5b4.

It is to be noted that, the first circuit switching device 5a1 to the fourth circuit switching device 5a4, and the fifth circuit switching device 5b1 to the eighth circuit switching device 5b4 are referred to simply as a circuit switching device, when they are generically named, and a numerical code 5 is used for them here.

Further, hereafter, gases other than ozone, such as oxygen, nitrogen, and nitrogen oxide will be referred to a gaseous material, and the mixture of a gaseous material and an ozone gas will be referred to as an ozonized gas.

The gaseous material source 1 can employ, for example, a tank, PSA (Pressure Swing Adsorption ) apparatus, and the like, and the gaseous material source 1 supplies gaseous material to the ozone generating portion 2. Further, the ozone generating portion 2 generates an ozonized gas which contains ozone, using the gaseous material which is supplied from the gaseous material source 1.

The first adsorption - desorption tower 3a and the second adsorption - desorption tower 3b are both provided with a gateway through which gas is introduced and discharged. A gateway which is installed on the lower portion of the first adsorption - desorption tower 3a is referred to as a first gateway 3a1. A gateway which is installed on the upper portion of the first adsorption - desorption tower 3a is referred to as a second gateway 3a2.

A gateway which is installed on the lower portion of the second adsorption - desorption tower 3b is referred to as a first gateway 3b1. A gateway which is installed on the upper portion of the second adsorption - desorption tower 3b is referred to as a second gateway 3b2. It is to be noted that, here, locations are expressed using "upper portion" and "lower portion." However, these terms explain the location on the drawing, and the arrangement in vertical and horizontal directions can be suitably and arbitrarily changed.

Ozonized gas is introduced from the ozone generating portion 2, to the first adsorption - desorption tower 3a or the second adsorption - desorption tower 3b. Material adsorbing preferentially ozone, which is contained in the ozonized gas, can be used suitably as an adsorbent 4a of the first adsorption - desorption tower 3a and an adsorbent 4b of the second adsorption - desorption tower 3b.

The adsorbent 4a and adsorbent 4b of this case can employ the material of the same kind, or the material of mutually different kinds. As an example of the adsorbent 4a and adsorbent 4b, silica gel is used, for example. The concentration of ozone on the surface of the adsorbent 4a and adsorbent 4b becomes higher than the concentration of ozone in the ozonized gas, owing to the adsorption characteristics of the adsorbent 4a and adsorbent 4b.

The control part 6 consists of a microcomputer and others, for example, and controls the operation for an opening and closing of a circuit switching device 5, by giving a control instruction to the circuit switching device. It is to be noted that, the operation for an opening and closing of the circuit switching device 5 can be performed, not only by control instructions from the control part 6, but also by manual operations.

On the way of the gas circuit which is opened to the outside from the second gateway 3a2 of the first adsorption - desorption tower 3a, a first concentration measurement part 7a and a second circuit switching device 5a2 are arranged, and on the way of the gas circuit which is opened to the outside from the second gateway 3b2 of the second adsorption - desorption tower 3b, a second concentration measurement part 7b and a sixth circuit switching device 5b2 are arranged.

That is, the first concentration measurement part 7a is installed between the branching point of the gas circuit of adsorption recovery use R1 and the gas circuit of exhaust use R0, and the first adsorption - desorption tower 3a; and the second concentration measurement part 7b is installed between the branching point of the gas circuit of adsorption recovery use R1 and the gas circuit of exhaust use R0, and the second adsorption - desorption tower 3b. The first concentration measurement part 7a and the second concentration measurement part 7b are the ones which measure the concentration of ozone or oxygen, which are discharged from the first adsorption - desorption tower 3a and the second adsorption - desorption tower 3b, and are indifferent to the method and composition for the measurement.

Next, explanation will be made about the behavior of the ozone supply apparatus 100 which is equipped with the constitution mentioned above.

Since the ozone supply apparatus 100 according to the Embodiment 1 carries out the operation for an opening and closing of the circuit switching device 5, by a control instruction from the control part 6, the gas circuit of exhaust use R0, the gas circuit of adsorption recovery use R1, and the gas circuit of supply use R2 can be formed selectively.

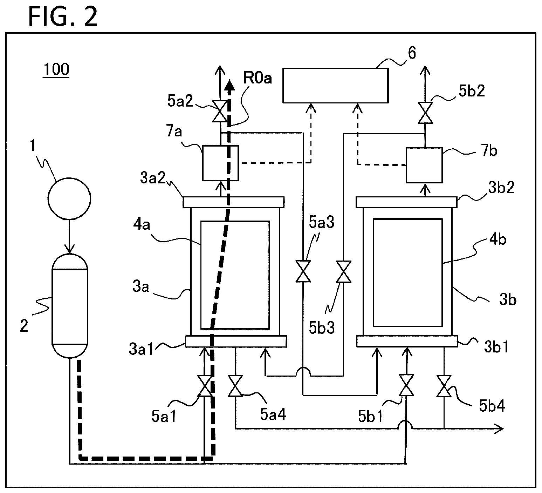

Hereinafter, explanation will be further made in more detail, about compositions and their actions of the gas circuit of exhaust use R0, the gas circuit of adsorption recovery use R1, and the gas circuit of supply use R2, using FIG. 2 to FIG. 7. Here, it is to be noted that, a gas treatment process in the gas circuit of exhaust use R0 and the gas circuit of adsorption recovery use R1 is referred to as an adsorption process, and a gas treatment process in the gas circuit of supply use R2 is referred to as a supply process.

First of all, a mixed gas which is produced in the ozone generating portion 2 is introduced in the first adsorption - desorption tower 3a. The mixed gas is adsorbed by the adsorbent 4a of the first adsorption - desorption tower 3a, at a predetermined pressure. In property, ozone is easier to absorb preferentially on the adsorbent 4a than oxygen, and then, oxygen which is not adsorbed is forced to leak out preferentially from the first adsorption - desorption tower 3a. Thereafter, the property of ozone in which ozone is harder to desorb from the adsorbent 4a is used.

The pressure of the first adsorption - desorption tower 3a is reduced gradually, and thereby, oxygen is drawn out preferentially and selectively. Moreover, a majority of oxygen is drawn out, and thereby, the concentration of ozone on the inside of the first adsorption - desorption tower 3a increases. When the concentration of ozone reaches a predetermined value, the gas circuit of supply use R2 is selected to the exit of the first adsorption - desorption tower 3a. The flow path is switched to a supply target, to which ozone is supplied, and a high concentration of ozone is delivered out.

Further, the gas circuit of exhaust use R0 is a circuit in which the first adsorption-desorption tower 3a and the second adsorption - desorption tower 3b are used as the ones of adsorption use of ozone. The gas circuit of adsorption recovery use R1 is a circuit which is used in a case where the first adsorption - desorption tower 3a is used as the one of adsorption use of ozone, and the second adsorption - desorption tower 3b is used as the one of adsorption recovery use of ozone, which is leaked out from the first adsorption-desorption tower 3a, and also in a case where the second adsorption- desorption tower 3b is used as the one of adsorption use of ozone, and the first adsorption - desorption tower 3a is used as the one of adsorption recovery use of ozone, which is leaked out from the second adsorption - desorption tower 3b. Further, the gas circuit of supply use R2 is a circuit which delivers out a high concentration of ozone, from the first adsorption - desorption tower 3a and the second adsorption - desorption tower 3b, to a supply destination.

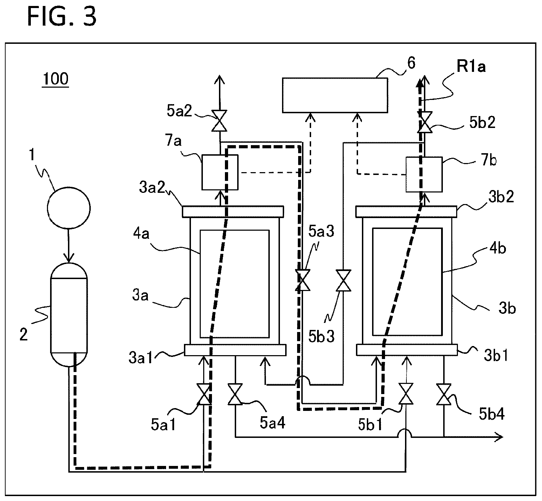

In a first adsorption process, the first gas circuit of exhaust use R0a which is shown in FIG. 2 and the first gas circuit of adsorption recovery use R1a which is shown in FIG. 3 refer to the concentration of a gas which is discharged from the adsorption - desorption tower 3, and the choice of circuits is performed so that less amount of ozone is discharged to the outside of the ozone supply apparatus.

As shown in FIG. 2, the first gas circuit of exhaust use R0a is formed by a control instruction from the control part 6, where the first circuit switching device 5a1 and the second circuit switching device 5a2 are both made in an opened state, and the third circuit switching device 5a3, the fourth circuit switching device 5a4, the fifth circuit switching device 5b1, the sixth circuit switching device 5b2, the seventh circuit switching device 5b3, and the eighth circuit switching device 5b4 are all made in a closed state.

In this first gas circuit of exhaust use R0a, gaseous material which contains oxygen is introduced from the gaseous material source 1 to the ozone generating portion 2, and the ozone generating portion 2 ozonizes the gaseous material. The ozonized gas which is produced in the ozone generating portion 2 passes through the first circuit switching device 5a1, and goes through in the direction from the first gateway 3a1 of the first adsorption - desorption tower 3a toward the second gateway 3a2. Ozone therein is adsorbed in the adsorbent 4a which is stored on the inside of the first adsorption - desorption tower.

The ozonized gas which is not adsorbed on the inside of the first adsorption - desorption tower 3a is discharged to the outside, through the first concentration measurement part 7a and the second circuit switching device 5a2.

As shown in FIG. 3, the first gas circuit of adsorption recovery use R1a is formed by a control instruction from the control part 6, where the first circuit switching device 5a1, the third circuit switching device 5a3, and the sixth circuit switching device 5b2 are made in an opened state, and the second circuit switching device 5a2, the fourth circuit switching device 5a4, the fifth circuit switching device 5b1, the seventh circuit switching device 5b3, and the eighth circuit switching device 5b4 are made in a closed state.

In this first gas circuit of adsorption recovery use R1a, gaseous material which contains oxygen is introduced from the gaseous material source 1 to the ozone generating portion 2, and the ozone generating portion 2 ozonizes the gaseous material. The ozonized gas which is produced in the ozone generating portion 2 passes through the first circuit switching device 5a1, and goes through in the direction from the first gateway 3a1 of the first adsorption - desorption tower 3a toward the second gateway 3a2. Ozone therein is adsorbed in the adsorbent 4a.

The ozonized gas which is not adsorbed on the inside of the first adsorption-desorption tower 3a passes through the first concentration measurement part 7a and the third circuit switching device 5a3, and goes through in the direction from the first gateway 3b 1 of the second adsorption - desorption tower 3b toward the second gateway 3b2. Ozone therein is adsorbed in the adsorbent 4b. The gas which is discharged from the second gateway 3b2 of the second adsorption - desorption tower 3b is discharged to the outside, through the second concentration measurement part 7b and the sixth circuit switching device 5b2.

As for the gas circuit during an adsorption process, the control part 6 refers to measured values of the first concentration measurement part 7a and the second concentration measurement part 7b, which are input to the control part 6. In a case where ozone is the measurement gas, and in a case where the measured value of the first concentration measurement part 7a is not more than the measured value of the second concentration measurement part 7b, the first gas circuit of exhaust use R0a is chosen. Further, in a case where the measured value of the first concentration measurement part 7a is larger than the measured value of the second concentration measurement part 7b, the first gas circuit of adsorption recovery use R1a is chosen.

Here, a case is shown in which ozone is a measurement gas of the first concentration measurement part 7a and the second concentration measurement part 7b. However, in a case where this measurement gas is oxygen, different results are obtained and those are as follows. That is, in a case where the measurement gas is oxygen, and in a case where the measured value of the first concentration measurement part 7a is lower than the measured value of the second concentration measurement part 7b, the first gas circuit of adsorption recovery use R1a is chosen. In a case where the measured value of the first concentration measurement part 7a is not smaller than the measured value of the second concentration measurement part 7b, the first gas circuit of exhaust use R0a is chosen.

The control part 6 switches the flow path of a gas, according to the difference of the measured values of the first concentration measurement part 7a and the measured value of the second concentration measurement part 7b. Thereby, a gas circuit by which less amount of ozone is discharged to the outside can be choose. It is to be noted that, explanation is made about which to choose ozone or oxygen, as a target gas, which is measured in the first concentration measurement part 7a and the second concentration measurement part 7b. Since the dominant component of a gaseous material is oxygen, main gaseous components which are introduced in the first concentration measurement part 7a and the second concentration measurement part 7b are ozone and oxygen. Therefore, the concentration of ozone can be indirectly detected by measuring the concentration of oxygen. The magnitude relationship in measurement conditions becomes opposite, when the measurement gas is changed.

When the control part 6 judges that a condition which is set up beforehand is fulfilled, for example, in a case where the amount of ozone adsorbed to the adsorbent 4a, which is stored on the inside of the first adsorption - desorption tower 3 a, reaches a fixed quantity, or in a case where a time relevant to adsorption elapses a predetermined time, or in a case where an operation shift signal is input from the outside, the control part 6 controls the circuit switching device 5, and thereby, the process shifts to a first supply process.

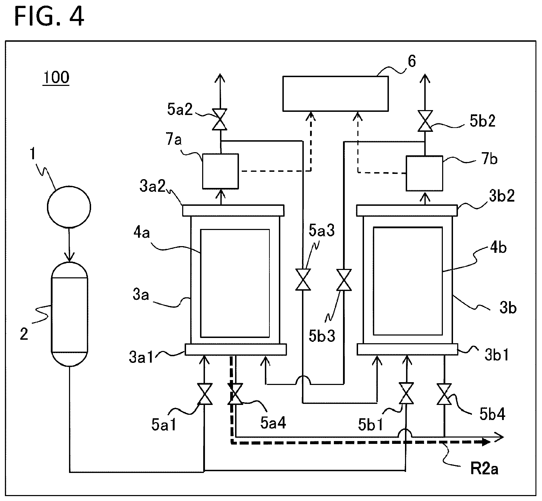

In the first supply process, the formation of a first gas circuit of supply use R2a which is shown in FIG. 4 is carried out.

As is shown in FIG. 4A, the first gas circuit of supply use R2a is formed by a control instruction from the control part 6, where the fourth circuit switching device 5a4 is made in an opened state, and the first circuit switching device 5a1, the second circuit switching device 5a2, the third circuit switching device 5a3, the fifth circuit switching device 5b1, the sixth circuit switching device 5b2, the seventh circuit switching device 5b3, and the eighth circuit switching device 5b4 are all made in a closed state.

In this first gas circuit of supply use R2a, the gas on the inside of the first adsorption - desorption tower 3a is discharged, from the first gateway 3a1 through the fourth circuit switching device 5a4, toward a supply target on the outside, that is, a demand point which is in need of ozone gas.

In a case where a demand for the necessary quantity of ozone gas is brought from a demand point of ozone gas, the control part 6 grasps the difference from a steady demand, as an amount of change. The control part 6 can supply an optimal amount of ozone, from the amount of ozone desorbing constantly, by changing the time for switching of the circuit switching device 5, according to the amount of change. When a calculated time for switching reaches, the control part 6 controls the circuit switching device 5, and thereby, the process shifts to a second adsorption process. In a case where the necessary quantity of ozone gas which is demanded from a demand point is other than a maximum value, the process will shift to a second adsorption process, while a part of the ozone gas remains in the adsorbent 4a, which is stored on the inside of the first adsorption - desorption tower 3a.

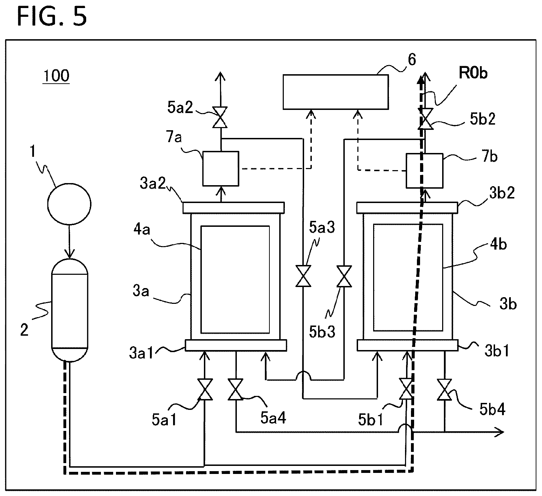

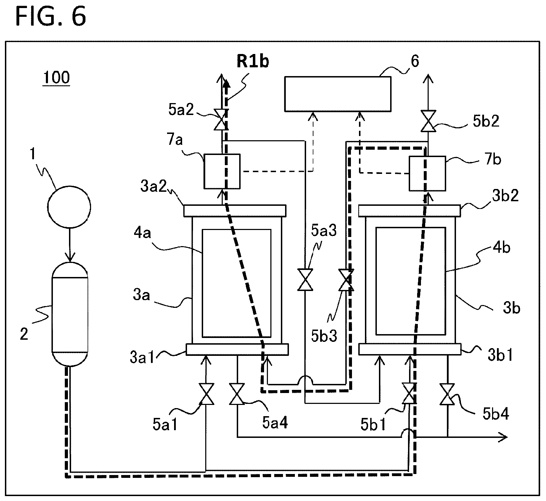

In the second adsorption process, the control part 6 refers to the concentration of a gas which is discharged from the first adsorption - desorption tower 3a and the concentration of a gas which is discharged from the second adsorption - desorption tower 3b. Between the second gas circuit of exhaust use R0b which is shown in FIG. 5 and the second gas circuit of adsorption recovery use R1b which is shown in FIG. 6, the choice of circuits is performed so that less amount of ozone is discharged to the outside of the ozone supply apparatus.

As shown in FIG. 5, the second gas circuit of exhaust use R0b is formed by a control instruction from the control part 6, where the fifth circuit switching device 5b 1 and the sixth circuit switching device 5b2 are both made in an opened state, and the first circuit switching device 5a1, the second circuit switching device 5a2, the third circuit switching device 5a3, the fourth circuit switching device 5a4, the seventh circuit switching device 5b3, and the eighth circuit switching device 5b4 are all made in a closed state.

In this second gas circuit of exhaust use R0b, the gaseous material which contains oxygen is introduced from the gaseous material source 1 to the ozone generating portion 2, and the ozone generating portion 2 ozonizes the gaseous material. The ozonized gas which is produced in the ozone generating portion 2 passes through the fifth circuit switching device 5b 1, and goes through in the direction from the first gateway 3b 1 of the second adsorption - desorption tower 3b toward the second gateway 3b2. Ozone which is included in the ozonized gas is adsorbed in the adsorbent 4b. The ozonized gas which is not adsorbed on the inside of the second adsorption - desorption tower 3b is discharged to the outside, through the second concentration measurement part 7b and the sixth circuit switching device 5b2.

As shown in FIG. 6, the second gas circuit of adsorption recovery use R1b is formed by a control instruction from the control part 6, where the fifth circuit switching device 5b1, the seventh circuit switching device 5b3, and the second circuit switching device 5a2 are all made in an opened state, and the first circuit switching device 5a1, the third circuit switching device 5a3, the fourth circuit switching device 5a4, the sixth circuit switching device 5b2, and the eighth circuit switching device 5b4 are all made in a closed state.

In this second gas circuit of adsorption recovery use R1b, gaseous material which contains oxygen is introduced from the gaseous material source 1 to the ozone generating portion 2, and the ozone generating portion 2 ozonizes the gaseous material. The ozonized gas which is produced in the ozone generating portion 2 passes through the fifth circuit switching device 5b 1, and goes through in the direction from the first gateway 3b 1 of the second adsorption - desorption tower 3b toward the second gateway 3b2.

Ozone which is included in the ozonized gas is adsorbed in the adsorbent 4b.

The ozonized gas which is not adsorbed on the inside of the second adsorption - desorption tower 3b passes through the second concentration measurement part 7b and the seventh circuit switching device 5b3, and goes through in the direction from the first gateway 3a1 of the first adsorption - desorption tower 3a toward the second gateway 3a2.

Ozone therein is adsorbed in the adsorbent 4a on the inside of the first adsorption - desorption tower. The gas which is discharged from the second gateway 3a2 of the first adsorption - desorption tower 3a will be discharged to the outside, through the first concentration measurement part 7a and the second circuit switching device 5a2.

The ozonized gas which is not adsorbed on the inside of the second adsorption - desorption tower 3b is introduced into the first gateway 3a1 of the first adsorption - desorption tower 3a for gas displacement. A high concentration of ozone, which remains in the first adsorption - desorption tower 3a in the first supply process, is pushed out by the gas displacement toward the second gateway 3a2 of the first adsorption - desorption tower 3a, and is discharged from the second gateway 3a2 to the outside portion of the ozone supply apparatus, after the elapse of a predetermined time.

Measured values by the first concentration measurement part 7a and measured values by the second concentration measurement part 7b are input in the control part 6. The control part 6 refers to those values, and determines the gas circuit during the adsorption process, depending on the following conditions.

That is, in a case where the measurement gas is ozone, the second gas circuit of exhaust use R0b is chosen, in a case where the measured value of the first concentration measurement part 7a is lower than the measured value of the second concentration measurement part 7b, and the second gas circuit of adsorption recovery use R1b is chosen, in a case where the measured value of the first concentration measurement part 7a is not smaller than the measured value of the second concentration measurement part 7b.

Further, in a case where the measurement gas is oxygen, and in a case where the measured value of the first concentration measurement part 7a is not more than the measured value of the second concentration measurement part 7b, the second gas circuit of adsorption recovery use R1b is chosen. In a case where the measured value of the first concentration measurement part 7a is higher than that of the measured value of the second concentration measurement part 7b, the second gas circuit of exhaust use R0b is chosen.

Since the control part 6 performs those controls, a gas circuit by which less amount of ozone is discharged to the outside can be chosen. Further, it becomes possible to minimize the leakage of a high concentration of ozone which remains in the first adsorption - desorption tower 3a in the first supply process, and the leakage of ozone which is exhausted from the second adsorption - desorption tower 3b, without being adsorbed, in the second adsorption process.

When the control part 6 judges that a condition which is set up beforehand is fulfilled, for example, in a case where the amount of ozone adsorbed to the adsorbent 4b, which is stored on the inside of the second adsorption - desorption tower 3b, reaches a fixed quantity, or in a case where a time relevant to adsorption lapses a predetermined time, or in a case where an operation shift signal is input from the outside, the control part 6 controls the circuit switching device 5, and thereby, the process shifts to the second supply process.

For that reason, the control part 6 holds information on the relation between adsorption time and amount adsorbed, with respect to the adsorbent 4a in the first adsorption - desorption tower 3a and the adsorbent 4b in the second adsorption - desorption tower 3b.

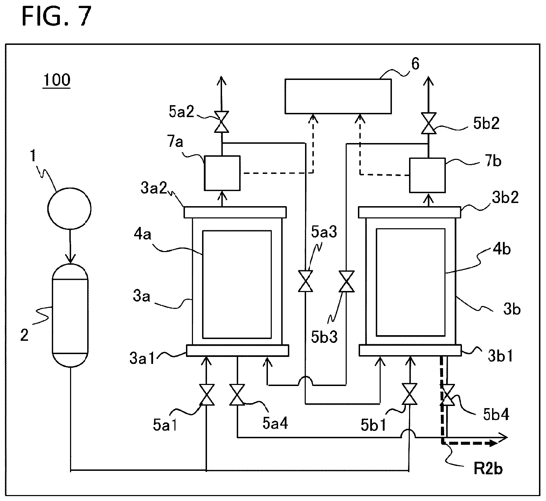

In the second supply process, the formation of a second gas circuit of supply use R2b which is shown in FIG. 7 is carried out.

As shown in FIG. 7, the second gas circuit of supply use R2b is formed by a control instruction from the control part 6, where the eighth circuit switching device 5b4 is made in an opened state, and the first circuit switching device 5a1, the second circuit switching device 5a2, the third circuit switching device 5a3, the fourth circuit switching device 5a4, the fifth circuit switching device 5b1, the sixth circuit switching device 5b2, and the seventh circuit switching device 5b3 are all made in a closed state.

In this second gas circuit of supply use R2b, ozonized gas is delivered out from the first gateway 3b 1 of the second adsorption - desorption tower 3b, through the eighth circuit switching device 5b4, toward a supply target on the outside, that is, a demand point which is in need of ozone.

Also in this second supply process, like the first gas circuit of supply use R2a, the control part 6 grasps the difference with a steady demand, as an amount of change, in a case where a demand for the necessary quantity of ozone gas is brought from a demand point of ozone gas. The control part 6 can supply an optimal amount of ozone, from the amount of ozone desorbing constantly, by changing the time for switching of the circuit switching device 5, according to the amount of change.

When the control part 6 judges that an operation shift signal is input from the outside, in a region where the rate of ozone which is desorbed from the adsorbent 4b is not more than 95 % of the amount of ozone absorbed, the control part 6 controls the circuit switching device 5, and thereby, the process shifts to the first adsorption process again, where the adsorbent 4b is stored on the inside of the second adsorption - desorption tower 3b, and the operation shift signal is issued according to the variation of a required injection rate.

Next, in order to better understand the advantage of the ozone supply apparatus 100 according to the Embodiment 1, Comparative Example 1 will be explained.

In the Comparative Example 1, a case is taken up in which there are not provided with the first gas circuit of exhaust use R0a and the second gas circuit of exhaust use R0b, which are gas circuits for discharging gases directly to the outside from the adsorption - desorption tower 3 of adsorption use. That is, the Comparative Example 1 is an example case in which the gas circuit in an adsorption process includes only the first gas circuit of adsorption recovery use R1a and the second gas circuit of adsorption recovery use R1b.

Since, in the Comparative Example 1, the gas circuit in an adsorption process is only the gas circuit of adsorption recovery use R1, the gas which is leaked out from the adsorption - desorption tower of adsorption use is always introduced, during the process, into an adsorption - desorption tower of adsorption recovery use.

Therefore, a high concentration of ozone, which remains at the end time of a supply process of a previous cycle, spends a longer period of time in being pushed out by gas displacement, toward the second gateway of the first adsorption - desorption tower. Accordingly, ozone gas has a growing risk to be discharged to the outside of the ozone supply apparatus.

Next, detailed explanation will be made further about differences on the beneficial effect which is accompanied by the switching of gas circuits in the adsorption process of ozone, regarding the ozone supply apparatus 100 of the Embodiment 1 and the ozone supply apparatus of the Comparative Example 1.

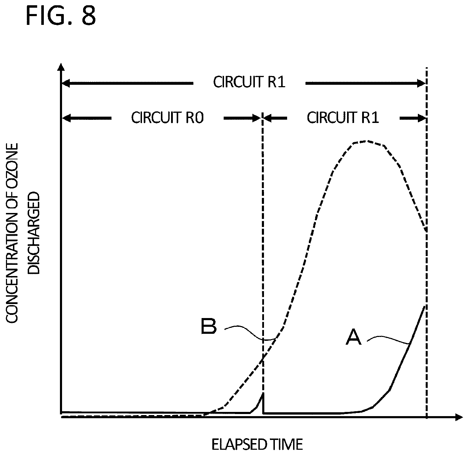

FIG. 8 is a characteristic diagram, showing the change of the concentration of ozone with an elapsed time T, which is contrasted with the case of a gas circuit of adsorption recovery use R1 which is formed in the Comparative Example 1, where the ozone is contained in an ozonized gas which is discharged from the adsorption - desorption tower 3 to the outside, in the gas circuit of exhaust use R0 and the gas circuit of adsorption recovery use R1, which are formed in the ozone supply apparatus 100 of the Embodiment 1.

In FIG. 8, the vertical axis indicates the concentration of ozone discharged and the horizontal axis indicates the elapsed time. In this drawing, line A of solid line expresses the change with the passage of time, in the concentration of ozone discharged, in accordance with the Embodiment 1, and curve B of dotted line expresses the change with the passage of time, in the concentration of ozone discharged, in accordance with the Comparative Example 1. Further, among arrows in the drawing, the arrows on the upper row according to the Comparative Example 1 express a state in which only the gas circuit R1 is employed, and the arrows on the lower row according to the Embodiment 1 express a state in which switching is performed between the gas circuit R0 and the gas circuit R1.

In a case of the Comparative Example 1, since only the gas circuit of adsorption recovery use R1 is formed during the adsorption process, the gas which is leaked out from the adsorption - desorption tower of adsorption use is introduced into the adsorption - desorption tower of adsorption recovery use. Therefore, in the beginning stage of the adsorption process, a majority of gas which is discharged from the second gateway of the adsorption - desorption tower of adsorption recovery use is oxygen gas, and as a dashed line shows, the concentration of ozone gas which is discharged to the outside will be in a low state.

However, in the end stage of the adsorption process, a high concentration of ozone which remains at the end time of a supply process of a previous cycle is discharged from the second gateway of the adsorption - desorption tower of adsorption recovery use, and as a dashed line shows, the concentration of ozone gas which is discharged to the outside will be in a very high state. Therefore, most of the ozone manufactured will be discharged to the outside, and then, the utilization rate of ozone is decreased significantly.

By contrast, in the ozone supply apparatus 100 according to the Embodiment 1, the gas circuit of exhaust use R0 or the gas circuit of adsorption recovery use R1 is chosen during the adsorption process, depending on the concentrations of gases which are discharged from the adsorption - desorption tower of adsorption use and the adsorption - desorption tower of adsorption recovery use.

Therefore, in the beginning stage of the adsorption process, a majority of gas which is discharged from the second gateway of the adsorption - desorption tower of adsorption use is oxygen gas, and as a solid line shows, the concentration of ozone gas which is discharged to the outside will be in a low state.

When the relation between the concentration of a gas which is discharged from the adsorption - desorption tower of adsorption use and the concentration of a gas which is discharged from the adsorption - desorption tower of adsorption recovery use changes, in the middle stage of then adsorption process, the gas circuit is switched from the gas circuit of exhaust use R0 to the gas circuit of adsorption recovery use R1, by the control part 6.

Thereby, as a solid line shows, the concentration of ozone gas which is discharged to the outside can be kept in a low state, also in the end stage of the adsorption process. Accordingly, since most of the ozone manufactured can be stored in the adsorption-desorption tower, the utilization rate of ozone can be kept in a high level.

As explained above, since the ozone supply apparatus 100 according to the Embodiment 1 can maintain the concentration of ozone gas in a low level, which is discharged to the outside of the ozone supply apparatus, compared with that of the Comparative Example 1, a high utilization rate of ozone can be realized.

Furthermore, in order to explain the advantage of the ozone supply apparatus 100 according to the Embodiment 1, Comparative Example 2 is taken up.

In the ozone supply apparatus according to the Comparative Example 2, it is assumed that in the switching of gas circuits in the adsorption process, no control is provided for switching from the gas circuit of adsorption recovery use R1 to the gas circuit of exhaust use R0. That is, the switching of gas circuits in the adsorption process deals a case in which switching is performed only from the gas circuit of exhaust use R0 to the gas circuit of adsorption recovery use R1.

Also in this Comparative Example 2, like the case of the Embodiment 1, control for an opening and closing of the circuit switching device 5 is carried out by a control instruction from the control part 6, to form a first gas circuit of exhaust use R0 and a second gas circuit of exhaust use R0b, a first gas circuit of adsorption recovery use R1a and a second gas circuit of adsorption recovery use R1b, and a first gas circuit of supply use R2a and a second gas circuit of supply use R2b.

In the Comparative Example 2, switching of gas circuits in the adsorption process is performed only from the gas circuit of exhaust use R0 to the gas circuit of adsorption recovery use R1. Therefore, after the gas circuit is switched to the gas circuit of adsorption recovery use R1, the gas which is leaked out from the adsorption - desorption tower of adsorption use is introduced in the adsorption - desorption tower of adsorption recovery use, till the adsorption process finishes.

Accordingly, compared with the Embodiment 1, a high concentration of ozone which remains at the end time of a supply process of a previous cycle, spends a longer period of time in being pushed out by gas displacement, toward the second gateway of the first adsorption - desorption tower, and the high concentration ozone has a growing risk to be discharged to the outside of the ozone supply apparatus.

Next, detailed explanation will be made further about differences on the beneficial effect which is accompanied by the switching of gas circuits in the adsorption process of ozone, regarding the ozone supply apparatus 100 of the Embodiment 1 and that of the Comparative Example 2.

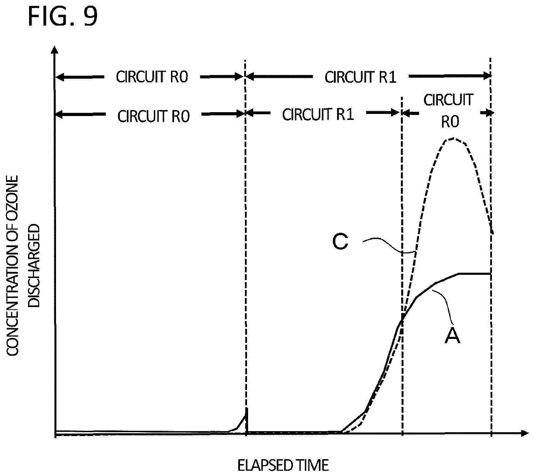

FIG. 9 is a characteristic diagram showing the change of the concentration of ozone with a time elapsed, where the ozone is contained in an ozonized gas which is discharged from an adsorption - desorption tower to the outside, when operations are carried out for switching bidirectionally between a gas circuit of exhaust use R0 and a gas circuit of adsorption recovery use R1, which are formed in the ozone supply apparatus 100 according to the Embodiment 1. The diagram is in contrast with a case of the Comparative Example 2, where operations are carried out for switching unidirectionally from the gas circuit of exhaust use R0 to the gas circuit of adsorption recovery use R1, which are formed in the ozone supply apparatus of the Comparative Example 2.
In FIG. 9, the vertical axis indicates the concentration of ozone discharged and the horizontal axis indicates the elapsed time. In this drawing, line A of solid line indicates the change with the passage of time, in the concentration of ozone discharged, in accordance with the Embodiment 1. And curve C of dotted line indicates the change with the passage of time, in the concentration of ozone discharged, in accordance with the Comparative Example 2.

Further, among arrows in the drawing, the arrows on the upper row according to the Comparative Example 2 express a state of switching between the gas circuit R0 and the gas circuit R1, and the arrows on the lower row according to the Embodiment 1 express a state of switching from the gas circuit R0 to the gas circuit R1, and further, a state of switching from the gas circuit R1 to the gas circuit R0.

In the beginning stage to the middle stage of the adsorption process, switching from the gas circuit of exhaust use R0 to the gas circuit of adsorption recovery use R1 is conducted. In the operations until the switching is conducted, since the Embodiment 1 and the Comparative Example 2 show the same tendency with regard to the time dependence of the concentration of ozone, which is discharged to the outside, detailed explanation here is omitted.

In the Comparative Example 2, the formation of the gas circuit of adsorption recovery use R1 is continued in the end stage of the adsorption process, irrespective of the concentration of ozone which is discharged from an adsorption - desorption tower of adsorption recovery use, and then, the gas which is leaked out from an adsorption - desorption tower of adsorption use is always introduced in an adsorption - desorption tower of adsorption recovery use.

Therefore, a high concentration of ozone, which remains at the end time of a supply process of a previous cycle, is pushed out by gas displacement toward the second gateway of an adsorption - desorption tower, and then, is discharged to the outside of the ozone supply apparatus. Thereby, as a dashed line shows, the concentration of ozone gas which is discharged to the outside will be in a high state. Accordingly, much of the ozone manufactured will be discharged to the outside and the utilization rate of ozone is deceased.

On the other hand, in the ozone supply apparatus 100 according to the Embodiment 1, the gas circuit of exhaust use R0 or the gas circuit of adsorption recovery use R1 is chosen during the adsorption process, depending on the concentrations of gases which are discharged from the adsorption - desorption tower of adsorption use and the adsorption - desorption tower of adsorption recovery use. Also in the end stage of the adsorption process, a high concentration of ozone, which remains at the end time of a supply process of a previous cycle, is pushed out by gas displacement toward the second gateway of an adsorption - desorption tower, and thereby, it is likely that the high concentration of ozone is discharged to the outside portion of the ozone supply apparatus.

Since the gas circuit is switched from the gas circuit of adsorption recovery use R1 to the gas circuit of exhaust use R0, as a solid line shows, a state in which the concentration of ozone gas which is discharged to the outside can be kept in a low state, also in the end stage of the adsorption process. Therefore, since much of the ozone manufactured can be stored in an adsorption-desorption tower, the utilization rate of ozone can be maintained in a high level.

As explained above, since the ozone supply apparatus 100 according to the Embodiment 1 can maintain the concentration of ozone gas in a low level, which is discharged to the outside of the ozone supply apparatus, compared with that of the Comparative Example 2, a high utilization rate of ozone can be realized.

Explanation will be made about Improved example of the ozone supply apparatus 100 according to the Embodiment 1.

In this Improved example, the gas circuit of exhaust use R0 is chosen in the adsorption process of the ozone supply apparatus 100 of the Embodiment 1, until a time elapses which is set up beforehand, or until a time elapses in which the concentration of a gas which is discharged from an adsorption - desorption tower of adsorption use reaches a concentration which is set up beforehand.

After that, the switching of gas circuits will shift to the one in accordance with the concentration of gases which are discharged from an adsorption - desorption tower of adsorption use and an adsorption - desorption tower of adsorption recovery use. Therefore, the constitution of an ozone supply apparatus is the same as that of the Embodiment 1.

Next, explanation will be made about the behavior of the ozone supply apparatus of the Improved example. Also in the ozone supply apparatus of this Improved example, control for an opening and closing of the circuit switching device 5 is carried out by a control instruction from the control part 6, like in a case of the Embodiment 1, to form the first gas circuit of exhaust use R0a and the second gas circuit of exhaust use R0b, the first gas circuit of adsorption recovery use R1a and the second gas circuit of adsorption recovery use R1b, and the first gas circuit of supply use R2a and the second gas circuit of supply use R2b.

Hereinafter, explanation will be made about the switching behavior in the ozone supply apparatus of this Improved example, which includes the first gas circuit of exhaust use R0a and the second gas circuit of exhaust use R0b, the first gas circuit of adsorption recovery use R1a and the second gas circuit of adsorption recovery use R1b, and the first gas circuit of supply use R2a and the second gas circuit of supply use R2b.

In the beginning stage of the first adsorption process, control for an opening and closing of the circuit switching device 5 is carried out by a control instruction from the control part 6, to form the first gas circuit of exhaust use R0a which is shown in FIG. 2. The behavior and beneficial effects of the first gas circuit of exhaust use R0a, which is formed in this case, are the same as in the case of the Embodiment 1 (FIG. 2). In the ozone supply apparatus, the formation of the first gas circuit of exhaust use R0a is continued, until a time elapses which is set beforehand in the control part 6, or until a time elapses in which the concentration of a gas which is discharged from an adsorption - desorption tower of adsorption use reaches a concentration which is set beforehand in the control part 6.

When either a condition about the time or a condition about the concentration is fulfilled, the control part 6 starts the control to switch the gas circuits of the first gas circuit of exhaust use R0a and the gas circuit of adsorption recovery use R1a, depending on the relation between the concentrations of a gas which is discharged from an adsorption - desorption tower of adsorption use and the concentration of a gas which is discharged from an adsorption - desorption tower of adsorption recovery use.

In the middle stage of the first adsorption process, control for an opening and closing of the circuit switching device 5 is carried out by a control instruction from the control part 6, to form the first gas circuit of adsorption recovery use R1a which is shown in FIG. 3. The behavior and beneficial effects of the first gas circuit of adsorption recovery use R1a, which is formed in this case, are the same as in the case of the Embodiment 1 (FIG. 3).

In the first supply process, control for an opening and closing of the circuit switching device 5 is carried out by a control instruction from the control part 6, to form the first gas circuit of supply use R2a which is shown in FIG. 4. The behavior and beneficial effects of the first gas circuit of supply use R2a, which is formed in this case, are the same as in the case of the Embodiment 1 (FIG. 4).

In the beginning stage of the second adsorption process, control for an opening and closing of the circuit switching device 5 is carried out by a control instruction from the control part 6, to form the second gas circuit of exhaust use R0b which is shown in FIG. 5. The behavior and beneficial effects of the second gas circuit of exhaust use R0b, which is formed in this case, are the same as in the case of the Embodiment 1 (FIG. 5).

In this Improved example, the formation of the second gas circuit of exhaust use R0b is continued, until a time elapses which is set beforehand in the control part 6, or until a time elapses in which the concentration of a gas which is discharged from an adsorption - desorption tower of adsorption use reaches a concentration which is set beforehand in the control part 6.

When either a condition about the time or a condition about the concentration is fulfilled, the control part 6 starts the control to switch the gas circuits of the second gas circuit of exhaust use R0b and the second gas circuit of adsorption recovery use R1b, depending on the relation between the concentration of a gas which is discharged from an adsorption - desorption tower of adsorption use and the concentration of a gas which is discharged from an adsorption - desorption tower of adsorption recovery use.

In the middle stage of the second adsorption process, control for an opening and closing of the circuit switching device 5 is carried out by a control instruction from the control part 6, to form the second gas circuit of adsorption recovery use R1b which is shown in FIG. 6. The behavior and beneficial effects of the second gas circuit of adsorption recovery use R1b, which is formed in this case, are the same as in the case of the Embodiment 1 (FIG. 6).

In the second supply process, control for an opening and closing of the circuit switching device 5 is carried out by a control instruction from the control part 6, to form the second gas circuit of supply use R2b which is shown in FIG. 7. The behavior and beneficial effects of the second gas circuit of supply use R2b, which is formed in this case, are the same as in the case of the Embodiment 1.

Next, explanation will be made about differences on the beneficial effect which is accompanied by the switching of gas circuits in the adsorption process of ozone, regarding the ozone supply apparatus 100 of the Embodiment 1 and that of the Improved example.

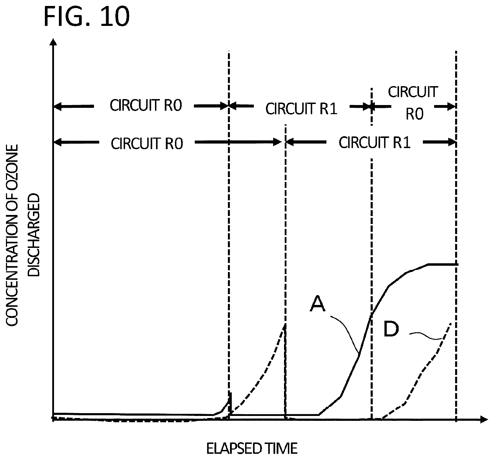

FIG. 10 is a characteristic diagram, showing the change of a concentration of ozone with the elapsed time, where the ozone is contained in the ozonized gas, which is discharged from the adsorption - desorption tower 3 to the outside, when operations are carried out for switching bidirectionally between a gas circuit of exhaust use R0 and a gas circuit of adsorption recovery use R1. Those gas circuits are formed in the ozone supply apparatus 100 according to the Embodiment 1 and the Improved example.

In FIG. 10, the vertical axis indicates the concentration of ozone discharged and the horizontal axis indicates the elapsed time. In this drawing, line A of solid line indicates the change with the passage of time, in the concentration of ozone discharged, in accordance with the Embodiment 1, and curve D of dotted line indicates the change with the passage of time, in the concentration of ozone discharged, in accordance with the Improved example.

Moreover, among arrows in the drawing, the arrows on the upper row according to the Improved example express a state of switching between the gas circuit R0 and the gas circuit R1, and the arrows on the lower row according to the Embodiment 1 express a state of switching from the gas circuit R0 to the gas circuit R1, and in addition, a state of switching from the gas circuit R1 to the gas circuit R0.

In the beginning stage to the middle stage of the adsorption process, switching from the gas circuit of exhaust use R0 to the gas circuit of adsorption recovery use R1 is conducted. In the operations until the switching is conducted, the ozone supply apparatus 100 of the Embodiment 1 and that of the Improved example show the same tendency with regard to the time dependence of the concentration of ozone, which is discharged to the outside.

In the ozone supply apparatus 100 according to the Embodiment 1, the gas circuit of exhaust use R0 or the gas circuit of adsorption recovery use R1 is always chosen during the adsorption process, depending on the concentrations of gases which are discharged from the adsorption - desorption tower of adsorption use and the adsorption - desorption tower of adsorption recovery use.

In the middle stage of the adsorption process, switching of gas circuits is carried out, even in a case where the concentrations of ozone gases, which are discharged from an adsorption - desorption tower of adsorption use and an adsorption - desorption tower of adsorption recovery use, are both small. Therefore, in the end stage of the adsorption process, the gas circuit of adsorption recovery use R1 is formed, and then, a high concentration of ozone remains at the end time of a supply process of a previous cycle, which is pushed out by gas displacement toward the second gateway of an adsorption - desorption tower.

Accordingly, the high concentration of ozone can be discharged to the outside of the ozone supply apparatus. In that case, since the gas circuit is switched from the gas circuit of adsorption recovery use R1 to the gas circuit of exhaust use R0, a state in which the concentration of an ozone gas which is discharged to the outside is in a low level can be maintained, also in the end stage of the adsorption process, as a dashed line in FIG. 10 shows.

Therefore, since most of the ozone manufactured can be stored in an adsorption - desorption tower, the utilization rate of ozone can be maintained in a high level. That is, when the desorption of ozone is finished, ozone which is adsorbed is made to remain on the inside of an adsorption - desorption tower. Thereby, it becomes possible to restrict the quantity of ozone to be supplied. In other words, it becomes possible to control the quantity to be supplied, according to the quantity required by a supply destination.

In the ozone supply apparatus pertinent to the case of the Improved example, the formation of the second gas circuit of exhaust use R0b is continued, until a time elapses which is set beforehand in the control part 6, or until a time elapses in which the concentration of a gas which is discharged from an adsorption - desorption tower of adsorption use reaches a concentration which is set beforehand in the control part 6.

After that, namely, after a predetermined time elapses, the switching of gas circuits shifts to a switching of gas circuits which refers to the concentrations of gases which are discharged from the adsorption - desorption tower of adsorption use and the adsorption tower of adsorption recovery use. Therefore, in a case where, in the middle stage of the adsorption process, the concentrations of ozone gases which are discharged from the adsorption - desorption tower of adsorption use and the adsorption - desorption tower of adsorption recovery use are both small, the gas circuit of exhaust use R0 will be chosen.

Since the timing of a switching of gas circuits shifts to a final stage side, it becomes possible to delay the leakage of a high concentration of ozone to the outside, which remains at the end time of a supply process of a previous cycle, in the end stage of the adsorption process. Thereby, the maximum value of the concentration of ozone to be discharged is lowered, compared with the ozone supply apparatus 100 according to the Embodiment 1, and the ozone use efficiency can be further improved.

As explained above, in the ozone supply apparatus 100 according to this Embodiment 1, since the concentration of an ozone gas which is discharged to the outside of the ozone supply apparatus can be maintained in a low level, a high utilization rate of ozone can be realized.

Embodiment 2 .

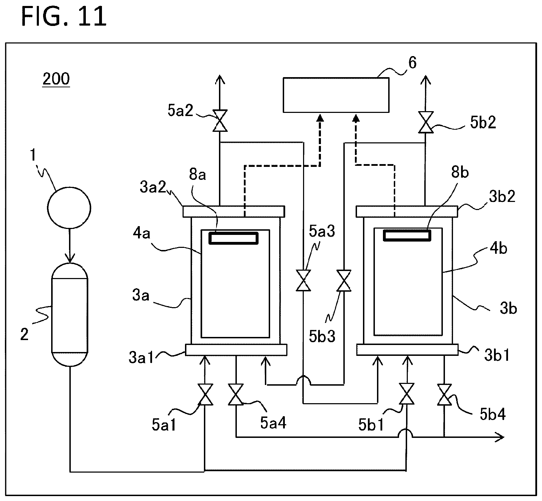

Explanation will be made about an ozone supply apparatus 200 according to the Embodiment 2, based on FIG. 11.

Explanation is made about differences between the ozone supply apparatus 200 of the Embodiment 2 and the ozone supply apparatus 100 of the Embodiment 1. In the Embodiment 1, reference values for the switching of gas circuits in the adsorption process employ the concentration of ozone and the concentration of oxygen which are measured in the first concentration measurement part 7a and the second concentration measurement part 7b.

On the other hand, in the Embodiment 2, referring is made to temperatures measured in a first temperature measurement part 8a which is installed in the upper portion of the first adsorbent 4a on the inside of the first adsorption - desorption tower 3a, and a second temperature measurement part 8b which is installed in the upper portion of the second adsorbent 4b on the inside of the second adsorption - desorption tower 3b.

Since other compositions are the same as in the case of the Embodiment 1, the same code is given to a component part which corresponds to or is equivalent to that of the Embodiment 1 which is shown in FIG. 1, and detailed explanation is omitted here. Next, explanation will be made about the behavior of the ozone supply apparatus 200.

In the ozone supply apparatus 200 according to the Embodiment 2, like in a case of the Embodiment 1, control for an opening and closing of the circuit switching device 5 is carried out by a control instruction from the control part 6, to form a first gas circuit of exhaust use R0a and a second gas circuit of exhaust use R0b, a first gas circuit of adsorption recovery use R1a and a second gas circuit of adsorption recovery use R1b, and a first gas circuit of supply use R2a and a second gas circuit of supply use R2b.

Hereinafter, explanation will be further made in more detail, about compositions and their actions of this ozone supply apparatus 200, which includes the first gas circuit of exhaust use R0a and the second gas circuit of exhaust use R0b, the first gas circuit of adsorption recovery use R1a and the second gas circuit of adsorption recovery use R1b, and the first gas circuit of supply use R2a and the second gas circuit of supply use R2b.

In the first adsorption process, control for an opening and closing of the circuit switching device 5 is carried out by a control instruction from the control part 6, to form the first gas circuit of exhaust use R0a which is shown in FIG. 2 and the first gas circuit of adsorption recovery use R1a which is shown in FIG. 3. The behavior and beneficial effects of the first gas circuit of exhaust use R0a and the first gas circuit of adsorption recovery use R1a, each of which is formed in this case, are the same as in the case of the Embodiment 1 (FIG. 2 and FIG. 3).

In the ozone supply apparatus 200, the control part 6 refers to measured values of the first temperature measurement part 8a and the second temperature measurement part 8b, which are input into the control part 6. In a case where the measured value of the first temperature measurement part 8a is not more than the measured value of the second temperature measurement part 8b, the first gas circuit of exhaust use R0a is chosen as the gas circuit during the adsorption process.

Moreover, in a case where the measured value of the first temperature measurement part 8a is higher than the measured value of the second temperature measurement part 8b, the control part 6 controls so that the first gas circuit of adsorption recovery use R1a is chosen.

Since the control part 6 controls a circuit switching device so that gas circuits are switched, a gas circuit by which less amount of ozone is discharged to the outside can be chosen.

When the control part 6 judges that a condition which is set up beforehand is fulfilled, for example, in a case where the amount of ozone adsorbed to the adsorbent 4a, which is stored in the first adsorption - desorption tower 3a, reaches a fixed quantity, or in a case where a time relevant to adsorption elapses a predetermined time, or in a case where an operation shift signal is input from the outside, the control part 6 controls the circuit switching device 5, and thereby, the process shifts to a first supply process.

In the first supply process, control for an opening and closing of the circuit switching device 5 is carried out by a control instruction from the control part 6, to form the first gas circuit of supply use R2a which is shown in FIG. 4. The behavior and beneficial effects of the first gas circuit of supply use R2a, which is formed in this case, are the same as those of the Embodiment 1.

In the second adsorption process, control for an opening and closing of the circuit switching device 5 is carried out by a control instruction from the control part 6, to form the second gas circuit of exhaust use R0b which is shown in FIG. 5. The behavior and beneficial effects of the second gas circuit of exhaust use R0b, which is formed in this case, are the same as those of the Embodiment 1.

In the middle stage of the second adsorption process, control for an opening and closing of the circuit switching device 5 is carried out by a control instruction from the control part 6, to form the second gas circuit of adsorption recovery use R1b which is shown in FIG. 6. The behavior and beneficial effects of the second gas circuit of adsorption recovery use R1b, which is formed in this case, are the same as those of the Embodiment 1.

The control part 6 refers to the measured values of the first temperature measurement part 8a and the second temperature measurement part 8b, which are input into the control part 6. In a case where the measured value of the first temperature measurement part 8a is lower than the measured value of the second temperature measurement part 8b, it is set up that the control part 6 may choose the second gas circuit of adsorption recovery use R1b, and in a case where the measured value of the first temperature measurement part 8a is not smaller than the measured value of the second temperature measurement part 8b, it is set up that the control part 6 may choose the second gas circuit of exhaust use R0b.

Since the control part 6 controls the circuit switching device 5, a gas circuit by which less amount of ozone is discharged to the outside can be chosen. Thereby, it becomes possible to minimize the leakage of a high concentration of ozone which remains in the adsorption-desorption tower 3a in the first supply process, and the leakage of ozone which is exhausted from the adsorption - desorption tower 3b, without being adsorbed, in the second adsorption process.

In the second supply process, control for an opening and closing of the circuit switching device 5 is carried out by a control instruction from the control part 6, to form the second gas circuit of supply use R2b which is shown in FIG.

7. The behavior and beneficial effects of the second gas circuit of supply use R2b, which is formed in this case, are the same as in the case of the Embodiment 1.

As explained above, the ozone supply apparatus 200 according to the Embodiment 2 is equipped with a temperature measurement part 8, and performs the switching of gas circuits which refers to a temperature measured. Thereby, a high utilization rate of ozone can be realized, like the ozone supply apparatus 100 according to the Embodiment 1, also in the composition where even the concentration measurement part 7 is not equipped.

Embodiment 3 .

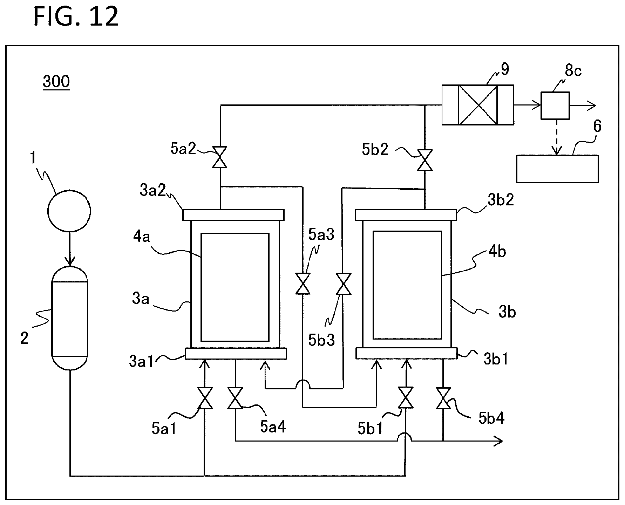

Explanation will be made about an ozone supply apparatus 300 according to the Embodiment 3, based on FIG. 12.

The difference between the ozone supply apparatus 300 of the Embodiment 3 and the ozone supply apparatus 100 of the Embodiment 1 lies in that the ozone supply apparatus 300 is equipped with an ozone decomposing installation 9 which decomposes an ozone gas which is discharged from an adsorption - desorption tower 3, and a third temperature measurement part 8c which measures the temperature of a gas which is discharged from the ozone decomposing installation 9. The ozone supply apparatus 300 refers to the temperature measured in the third temperature measurement part 8c, as a reference value for the switching of gas circuits, in an adsorption process.

The ozone decomposing installation 9 is the one which decomposes ozone gas which will be introduced, and changes it into oxygen gas. Those examples of the installation include an installation which employs a thermal decomposition system in which ozone gas is decomposed by heating, or an installation which employs a catalyst system in which ozone gas is decomposed using a decomposition catalyst such as manganese.

The third temperature measurement part 8c measures the temperature of a gas whose ozone has been already decomposed in the ozone decomposing installation 9. The decomposition heat of ozone is produced, according to the amount of ozone which is introduced into the ozone decomposing installation 9. Since the temperature of the gas rises, the amount of ozone gas introduced can be estimated by measuring a temperature of the outlet gas of the ozone decomposing installation 9. Therefore, when the measured temperature of a gas reaches a predetermined value, the detection can be used for controlling.

Since other compositions are the same as in the case of the Embodiment 1, the same code is given to a component part which corresponds to or is equivalent to that of the Embodiment 1 which is shown in FIG. 1, and detailed explanation is omitted here. Next, explanation is made about the behavior of the ozone supply apparatus 300.

Also in the ozone supply apparatus 300 of the Embodiment 3, control for an opening and closing of the circuit switching device 5 is carried out by a control instruction from the control part 6, like the case of the Embodiment 1, to form a first gas circuit of exhaust use R0a and a second gas circuit of exhaust use R0b, a first gas circuit of adsorption recovery use R1a and a second gas circuit of adsorption recovery use R1b, and a first gas circuit of supply use R2a and a second gas circuit of supply use R2b.

Hereinafter, explanation will be made about the constitutions and their actions of this ozone supply apparatus 300, which includes the first gas circuit of exhaust use R0a and the second gas circuit of exhaust use R0b, the first gas circuit of adsorption recovery use R1a and the second gas circuit of adsorption recovery use R1b, and the first gas circuit of supply use R2a and the second gas circuit of supply use R2b.

In the first adsorption process, control for an opening and closing of the circuit switching device 5 is carried out by a control instruction from the control part 6, to form the first gas circuit of exhaust use R0a which is shown in FIG. 2 and the first gas circuit of adsorption recovery use R1a which is shown in FIG. 3.

The behavior and beneficial effects of the first gas circuit of exhaust use R0a and the first gas circuit of adsorption recovery use R1a, each of which is formed in this case, are the same as in the case of the Embodiment 1 (FIG. 2 and FIG. 3 ).

In the ozone supply apparatus 300, a first temperature setting value A and a second temperature setting value B ( however, the first temperature setting value A is supposed to be lower than the second temperature setting value B ) are set beforehand in the control part 6, and the gas circuit during the adsorption process depends on those temperature setting values. When the measured value in the third temperature measurement part 8c which is input into the control part 6 fulfils the conditions shown below, the control part 6 performs a circuit switching.

That is, in a case where the measured value of the third temperature measurement part 8c is not more than the first temperature setting value A, the first gas circuit of exhaust use R0a is chosen. In a case where the measured value in the third temperature measurement part 8c is a value between the first temperature setting value A and the second temperature setting value B, the first gas circuit of adsorption recovery use R1a is chosen. In a case where the measured value in the third temperature measurement part 8c is not smaller than the second temperature setting value B, the first gas circuit of exhaust use R0a is chosen.

Since the control part 6 performs the control which is in accordance with the measured value of the third temperature measurement part 8c, the control part 6 can choose a gas circuit by which less amount of ozone is discharged to the outside, based on the concentration of ozone which is estimated from the measured value of the third temperature measurement part 8c.

When the control part 6 judges that a condition which is set up beforehand is fulfilled, for example, in a case where the amount of ozone adsorbed to the adsorbent 4a, which is stored on the inside of the first adsorption - desorption tower 3 a, reaches a predetermined quantity, or in a case where a time relevant to adsorption elapses a predetermined time, or in a case where an operation shift signal is input from the outside, the control part 6 controls the circuit switching device 5, and thereby, the process shifts to a first supply process.

In the first supply process, control for an opening and closing of the circuit switching device 5 is carried out by a control instruction from the control part 6, to form the first gas circuit of supply use R2a which is shown in FIG. 4. The behavior and beneficial effects of the first gas circuit of supply use R2a, which is formed in this case, are the same as in the case of the Embodiment 1.

In the second adsorption process, control for an opening and closing of the circuit switching device 5 is carried out by a control instruction from the control part 6, to form the second gas circuit of exhaust use R0b which is shown in FIG. 5. The behavior and beneficial effects of the second gas circuit of exhaust use R0b, which is formed in this case, are the same as in the case of the Embodiment 1.

In the second adsorption process, control for an opening and closing of the circuit switching device 5 is carried out by a control instruction from the control part 6, to form the second gas circuit of adsorption recovery use R1b which is shown in FIG. 6. The behavior and beneficial effects of the second gas circuit of adsorption recovery use R1b, which is formed in this case, are the same as in the case of the Embodiment 1.

In the ozone supply apparatus 300, a first temperature setting value A and a second temperature setting value B ( however, the first temperature setting value A is supposed to be lower than the second temperature setting value B ) are set beforehand in the control part 6, and the gas circuit during the adsorption process depends on those temperature setting values. When the measured value in the third temperature measurement part 8c which is input into the control part 6 fulfills a condition shown below, the control part 6 performs a circuit switching.

That is, in a case where the measured value in the third temperature measurement part 8c is not more than the first temperature setting value A, the second gas circuit of exhaust use R0b is chosen. In a case where the measured value in the third temperature measurement part 8c is a value between the first temperature setting value A and the second temperature setting value B, the second gas circuit of adsorption recovery use R1b is chosen. In a case where the measured value in the third temperature measurement part 8c is not smaller than the second temperature setting value B, the second gas circuit of exhaust use R0b is chosen.

Since the control part 6 performs the control which is in accordance with the measured value in the third temperature measurement part 8c, the control part 6 can choose a gas circuit by which less amount of ozone is discharged to the outside, based on the concentration of ozone which is estimated from the measured value in the third temperature measurement part 8c.

It becomes possible to minimize the leakage of a high concentration of ozone which remains in the adsorption - desorption tower 3a in the first supply process, and the leakage of the ozone which is exhausted from the adsorption - desorption tower 3b, without being adsorbed, in the second adsorption process.

In the second supply process, control for an opening and closing of the circuit switching device 5 is carried out by a control instruction from the control part 6, to form the second gas circuit of supply use R2b which is shown in FIG. 7. The behavior and beneficial effects of the second gas circuit of supply use R2b, which is formed in this case, are the same as in the case of the Embodiment 1.

As explained above, the ozone supply apparatus 300 according to the Embodiment 3 is equipped with the ozone decomposing installation 9 and the third temperature measurement part 8c, and performs the switching of gas circuits which refers to the temperature measured. Thereby, a high utilization rate of ozone can be realized, like the ozone supply apparatus 100 according to the Embodiment 1, also in the composition where even the concentration measurement part 7 is not equipped.

Embodiment 4 .

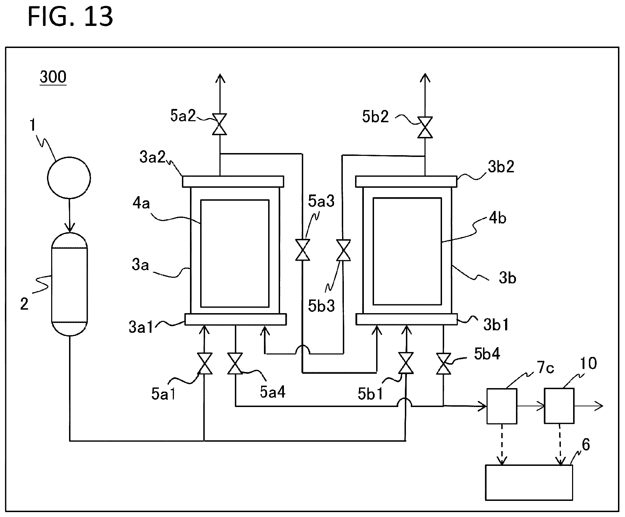

Explanation is made about an ozone supply apparatus 400 according to the Embodiment 4, based on FIG. 13.

The difference between the ozone supply apparatus 400 of the Embodiment 4 and the ozone supply apparatus 100 of the Embodiment 1 lies in a point where the ozone supply apparatus 400 is equipped with a third concentration measurement part 7c which measures the concentration of an ozone gas which is supplied to the gas circuit on the flow path, for suppling an ozone gas to a supply target from an adsorption - desorption tower 3, and a flow rate measurement part 10 which measures a flow rate. In the control part 6, an amount of ozone supply is calculated from the concentration of ozone which is measured in the third concentration measurement part 7c and the flow rate of ozone which is measured in the flow rate measurement part 10. The ozone supply apparatus 400 refers to the amount of ozone supply, as a reference value of the switching of gas circuits in the adsorption process.

An amount of ozone supply Q1 is calculated by the following calculus equation in the control part 6, using a concentration of ozone C1 which is measured in the third concentration measurement part 7c, a flow rate of ozone F1 which is measured in the flow rate measurement part 10, and a supply time T1.

$$\text{Amount of ozone supply } Q_i$$
$$= \Sigma \, ( \, \text{Concentration of ozone } C_i \text{ x Flow rate of ozone } F_i \, ) \, ( \, i = 0 - T1 \, )$$

By deducting the amount of ozone supply Q1 from an amount of ozone adsorbed Q2, a residue amount of ozone Q3 can be estimated, where Q1 is calculated by the above calculus equation, Q2 is set up beforehand, and Q3 is an ozone amount on the inside of an adsorption - desorption tower, after a supply process is finished.

Since other compositions are the same as in the case of the Embodiment 1, the same code is given to a component part which corresponds to or is equivalent to that of the Embodiment 1 which is shown in FIG. 1, and detailed explanation is omitted here.

Next, explanation will be made about the behavior of the ozone supply apparatus 400.

Also in the ozone supply apparatus 400 of the Embodiment 4, control for an opening and closing of the circuit switching device 5 is carried out by a control instruction from the control part 6, like in the case of the Embodiment 1, to form a first gas circuit of exhaust use R0a and a second gas circuit of exhaust use R0b, a first gas circuit of adsorption recovery use R1a and a second gas circuit of adsorption recovery use R1b, and a first gas circuit of supply use R2a and a second gas circuit of supply use R2b.

Hereinafter, explanation will be made about compositions and their actions of this ozone supply apparatus 400, which includes the first gas circuit of exhaust use R0a and the second gas circuit of exhaust use R0b, the first gas circuit of adsorption recovery use R1a and the second gas circuit of adsorption recovery use R1b, and the first gas circuit of supply use R2a and the second gas circuit of supply use R2b.

In the first adsorption process, control for an opening and closing of the circuit switching device 5 is carried out by a control instruction from the control part 6, to form the first gas circuit of exhaust use R0a which is shown in FIG. 2 and the first gas circuit of adsorption recovery use R1a which is shown in FIG. 3. The behavior and beneficial effects of the first gas circuit of exhaust use R0a and the first gas circuit of adsorption recovery use R1a, each of which is formed in this case, are the same as in the case of the Embodiment 1 (FIG. 2 and FIG. 3).

In the ozone supply apparatus 400, a first ozone remain preset value A and a second ozone remain preset value B are set beforehand in the control part 6 ( however, the first ozone remain preset value A is supposed to be lower than the second ozone remain preset value B ), and the gas circuit during the first adsorption process depends on those preset values. When a residue amount of ozone Q3 which is calculated in the control part 6 is within the following conditions, the control part 6 performs a circuit switching.

First of all, in a case where the residue amount of ozone Q3 is not more than the first ozone remain preset value A, the first gas circuit of adsorption recovery use R1a is chosen, and no switching of gas circuits is performed.

Next, in a case where the residue amount of ozone Q3 is in a state between the first ozone remain preset value A and the second ozone remain preset value B, the gas circuit is switched from the first gas circuit of exhaust use R0a to the first gas circuit of adsorption recovery use R1a, after a switch time elapses which is set beforehand in the control part 6.

Furthermore, in a case where the residue amount of ozone Q3 is not smaller than the second ozone remain preset value B, the first gas circuit of exhaust use R0a is chosen, and no switching of gas circuits is performed.

Since the control part 6 controls the switching of gas circuits, a gas circuit by which less amount of ozone is discharged to the outside can be chosen, from the calculated residue amount of ozone Q3.

When the control part 6 judges that a condition which is set up beforehand is fulfilled, for example, in a case where the amount of ozone adsorbed to the adsorbent 4a, which is stored on the inside of the first adsorption - desorption tower 3 a, reaches a fixed quantity, or in a case where a time relevant to adsorption elapses a predetermined time, or in a case where an operation shift signal is input from the outside, the control part 6 controls the circuit switching device 5, and thereby, the process shifts to the first supply process.

In the first supply process, control for an opening and closing of the circuit switching device 5 is carried out by a control instruction from the control part 6 to form the first gas circuit of supply use R2a which is shown in FIG. 4. Since the behavior and beneficial effects of the first gas circuit of supply use R2a, which is formed in this case, are the same as in the case of the Embodiment 1 (FIG. 4), detailed explanation is omitted here.

In the second adsorption process, control for an opening and closing of the circuit switching device 5 is carried out by a control instruction from the control part 6, to form the second gas circuit of exhaust use R0b which is shown in FIG. 5. Since the behavior and beneficial effects of the second gas circuit of exhaust use R0b, which is formed in this case, are the same as in the case of the Embodiment 1 (FIG. 5), detailed explanation is omitted here.

In the second adsorption process, control for an opening and closing of the circuit switching device 5 is carried out by a control instruction from the control part 6, to form the second gas circuit of adsorption recovery use R1b which is shown in FIG. 6. Since the behavior and beneficial effects of the second gas circuit of adsorption recovery use R1b, which is formed in this case, are the same as in the case of the Embodiment 1 (FIG. 6), detailed explanation is omitted here.

In the ozone supply apparatus 400, a first ozone remain preset value A and a second ozone remain preset value B are set beforehand in the control part 6 ( however, the first ozone remain preset value A is supposed to be lower than the second ozone remain preset value B ), and the gas circuit during the second adsorption process depends on those preset values. In a case where a residue amount of ozone Q3 which is calculated in the control part 6 is within the following conditions, the control part 6 performs a circuit switching, according to the contents.

First of all, in a case where the residue amount of ozone Q3 is not more than the first ozone remain preset value A, the second gas circuit of adsorption recovery use R1b is chosen, and no switching of gas circuits is performed.

Next, in a case where the residue amount of ozone Q3 is in a state between the first ozone remain preset value A and the second ozone remain preset value B, the gas circuit is switched from the second gas circuit of exhaust use R0b to the second gas circuit of adsorption recovery use R1b, after a switch time elapses which is set beforehand in the control part 6.

Furthermore, in a case where the residue amount of ozone Q3 is not smaller than the second ozone remain preset value B, the second gas circuit of exhaust use R0b is chosen, and no switching of gas circuits is performed.

Since the control part 6 controls the switching of gas circuits, a gas circuit by which less amount of ozone is discharged to the outside can be chosen, based on the calculated residue amount of ozone Q3. It becomes possible to minimize the leakage of a high concentration of ozone which remains in the adsorption - desorption tower 3a, in the first supply process, and the leakage of the ozone which is exhausted from the adsorption-desorption tower 3b, without being adsorbed, in the second adsorption process.

In the second supply process, control for an opening and closing of the circuit switching device 5 is carried out by a control instruction from the control part 6, to form the second gas circuit of supply use R2b which is shown in FIG. 7. The behavior and beneficial effects of the second gas circuit of supply use R2b, which is formed in this case, are the same as in the case of the Embodiment 1.

As explained above, the ozone supply apparatus 400 according to the Embodiment 4 is equipped with a third concentration measurement part 7c and a flow rate measurement part 10, and performs the switching of gas circuits which refers to an ozone supply amount, where the control part 6 calculates the ozone supply amount, from the concentration of ozone which is measured in the third concentration measurement part 7c, and the ozone flow rate which is measured in the flow rate measurement part 10. Thereby, a high utilization rate of ozone can be realized, like the ozone supply apparatus 100 according to the Embodiment 1, also in the composition where even the concentration measurement part 7 is not equipped.

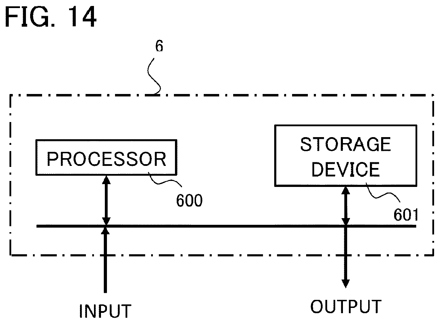

It is to be noted that, the control part 6 is composed of a processor 600 and a storage device 601, as FIG. 14 shows an example of the hardware. The storage device is provided with volatile memory devices, such as random access memories, and nonvolatile auxiliary storage devices, such as flash memories, which are not shown in the drawing.

Further, the storage device is provided with auxiliary storage devices of hard disks, instead of flash memories. The processor 600 executes a program which is input from the storage device 601. In this case, the program is input into the processor 600, via volatile memory devices, from auxiliary storage devices. Further, the processor 600 is allowed to output data of calculated results and others to the volatile memory devices of the storage device 601, and is also allowed to save the data, via the volatile memories, in the auxiliary storage device.

Although the present application is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments.

It is therefore understood that numerous modifications which have not been exemplified can be devised without departing from the scope of the present application. For example, at least one of the constituent components may be modified, added, or eliminated. At least one of the constituent components mentioned in at least one of the preferred embodiments may be selected and combined with the constituent components mentioned in another preferred embodiment.

Explanation of Numerals and Symbols

1       Gaseous material source
2       Ozone generating portion
3a      First adsorption - desorption tower
3a1     First gateway

| 3b1 | First gateway |
| 3a2 | Second gateway |
| 3b2 | Second gateway |
| 3b | Second adsorption - desorption tower |
| 4a | Adsorbent |
| 4b | Adsorbent |
| 5 | Circuit switching device |
| 5a1 | First circuit switching device |
| 5a2 | Second circuit switching device |
| 5a3 | Third circuit switching device |
| 5a4 | Fourth circuit switching device |
| 5b1 | Fifth circuit switching device |
| 5b2 | Sixth circuit switching device |
| 5b3 | Seventh circuit switching device |
| 5b4 | Eighth circuit switching device |
| 6 | Control part |
| 7a | First concentration measurement part |
| 7b | Second concentration measurement part |
| 7c | Third concentration measurement part |
| 8a | First temperature measurement part |
| 8b | Second temperature measurement part |
| 8c | Third temperature measurement part |
| 9 | Ozone decomposing installation |
| 10 | Flow rate measurement part |
| 100 | Ozone supply apparatus |
| 200 | Ozone supply apparatus |
| 300 | Ozone supply apparatus |
| 400 | Ozone supply apparatus |
| R0 | Gas circuit of exhaust use |
| R0a | First gas circuit of exhaust use |
| R0b | Second gas circuit of exhaust use |
| R1 | Gas circuit of adsorption recovery use |
| R1a | First gas circuit of adsorption recovery use |
| R1b | Second gas circuit of adsorption recovery use |
| R2 | Gas circuit of supply use |
| R2a | First gas circuit of supply use |
| R2b | Second gas circuit of supply use |

**Claims**

1. An ozone supply apparatus which condenses and supplies an ozone gas by a first adsorption - desorption tower and a second adsorption - desorption tower in which an adsorbent is stored,
the ozone supply apparatus comprising:

- - a gas circuit of exhaust use which discharges a gas discharged from the first adsorption-desorption tower, to an outside of the ozone supply apparatus,
- - a gas circuit of adsorption recovery use, unlike the gas circuit of exhaust use, which passes a gas discharged from the first adsorption - desorption tower, through the second adsorption - desorption tower, and then, discharges the gas to an outside portion of the ozone supply apparatus,
- - a circuit switching device which switches a flow path of the gas circuit of exhaust use and the gas circuit of adsorption recovery use, and
- - control part which controls an opening and closing of the circuit switching device, according to a state of the first adsorption - desorption tower and a state of the second adsorption - desorption tower.

2. The ozone supply apparatus according to claim 1,

further comprising:

- - a first concentration measurement part, which measures a state of the first adsorption-desorption tower, and
- - a second concentration measurement part, which measures a state inside of the second adsorption - desorption tower,

wherein the circuit switching device is controlled according to a concentration of ozone or a concentration of oxygen.

3. The ozone supply apparatus according to claim 1,

further comprising:

- a first temperature measurement part which measures a temperature state of an upper portion of the adsorbent inside of the first adsorption - desorption tower, and
- a second temperature measurement part which measures a temperature state of an upper portion of the adsorbent inside of the second adsorption - desorption tower,

wherein the circuit switching device is controlled according to the temperature state.

4. The ozone supply apparatus according to claim 1 or 2,

wherein, in a case where a concentration of ozone of an ozone discharged from the first adsorption - desorption tower is higher than a concentration of ozone of the second adsorption - desorption tower, the control part controls to switch the flow path from the gas circuit of exhaust use of the first adsorption - desorption tower to the gas circuit of adsorption recovery use, and
in a case where the concentration of ozone of the ozone discharged from the first adsorption - desorption tower is lower than the concentration of ozone of the second adsorption - desorption tower, the control part controls to switch the flow path from the gas circuit of adsorption recovery use of the first adsorption - desorption tower to the gas circuit of exhaust use.

5. The ozone supply apparatus according to claim 1 or 2,
wherein, in a case where an oxygen concentration of an ozone discharged from the first adsorption - desorption tower is lower than an oxygen concentration of an ozone of the second adsorption - desorption tower, the control part controls to switch the flow path from the gas circuit of exhaust use of the first adsorption - desorption tower to the gas circuit of adsorption recovery use, and in a case where the oxygen concentration of the ozone discharged from the first adsorption - desorption tower is higher than the oxygen concentration of the ozone of the second adsorption - desorption tower, the control part controls to switch the flow path from the gas circuit of adsorption recovery use of the first adsorption - desorption tower to the gas circuit of exhaust use.

6. The ozone supply apparatus according to claim 1 or 2,
wherein, after a concentration of ozone or a concentration of oxygen, which is leaked out from the first adsorption - desorption tower, reaches a predetermined value which is set up beforehand, or a time relevant to adsorption elapses a predetermined time, starts a control for the opening and closing of the circuit switching device.

7. The ozone supply apparatus according to claim 2,

wherein the first concentration measurement part is installed between a branching point of the gas circuit of adsorption recovery use and the gas circuit of exhaust use, and the first adsorption - desorption tower, and the second concentration measurement part is installed between a branching point of the gas circuit of adsorption recovery use and the gas circuit of exhaust use and the second adsorption - desorption tower.

8. The ozone supply apparatus according to claim 1,
wherein an amount of ozone to be supplied can be varied, whereby ozone absorbed is made to remain on an inside of an adsorption - desorption tower, at an end time of ozone desorption.

9. The ozone supply apparatus according to claim 3,

wherein, the state of the first adsorption - desorption tower and the state of the second adsorption-desorption tower are the temperature state on the inside of the first adsorption-desorption tower and the temperature state on the inside of the second adsorption-desorption tower, and

in a case where the temperature on the inside of the first adsorption - desorption tower is lower than the temperature on the inside of the second adsorption - desorption tower, the flow path is switched from the gas circuit of exhaust use to the gas circuit of adsorption recovery use, and

in a case where the temperature on the inside of the first adsorption - desorption tower is higher than the temperature on the inside of the second adsorption - desorption tower, the flow path is switched from the gas circuit of adsorption recovery use to the gas circuit of exhaust use.

10. The ozone supply apparatus according to claim 3 or 8,
wherein, after the temperature on an inside of the first adsorption - desorption tower reaches a predetermined value which is set up beforehand, the control part starts a control for the opening and closing of the circuit switching device.

11. The ozone supply apparatus according to claim 1,

further comprising:

- an ozone decomposing installation which conducts a decomposing processing of the ozone gas discharged from the first adsorption - desorption tower and the second adsorption - desorption tower, and
- a temperature measurement part which measures a temperature of a gas discharged from the ozone decomposing installation,

wherein in a case where a gas temperature by the temperature measurement part reaches a first predetermined value, the flow path is switched from the gas circuit of exhaust use to the gas circuit of adsorption recovery use, and in a case where the gas temperature by the temperature measurement part reaches a second redetermined value, the flow path is switched from the gas circuit of adsorption recovery use to the gas circuit of exhaust use.

12. The ozone supply apparatus according to claim 1,

further comprising:

- a flow rate measurement part which measures a flow rate of a desorption ozone, at an ozone desorption time, and
- a concentration measurement part which measures a concentration of ozone of a desorption ozone,

wherein the control part determines a timing for switching a flow path from the gas circuit of exhaust use to the gas circuit of adsorption recovery use, and a timing for switching a flow path from the gas circuit of adsorption recovery use to the gas circuit of exhaust use, according to a desorption amount of ozone, calculated from the flow rate and the concentration of the desorption ozone, which are measured by the flow rate measurement part and the concentration measurement part.

13. An ozone supply method, comprising:

using an ozone supply apparatus which condenses and supplies an ozone gas by use of a first adsorption - desorption tower storing an adsorbent on an inside thereof and a second adsorption - desorption tower storing an adsorbent on an inside thereof,
discharging a gas which is discharged from the first adsorption - desorption tower, to an outside of the ozone supply apparatus at an ozone adsorption time,
in a case where a concentration of ozone discharged from the first adsorption - desorption tower is higher than a concentration of ozone discharged from the second adsorption - desorption tower, and
controlling for discharging the gas which is discharged from the first adsorption - desorption tower, to an outside portion of the ozone supply apparatus, after passing the gas through the second adsorption - desorption tower, in a case where the concentration of ozone discharged from the first adsorption - desorption tower is lower than the concentration of ozone discharged from the second adsorption - desorption tower.

14. An ozone supply method, comprising:

using an ozone supply apparatus which condenses and supplies an ozone gas by use of a first adsorption - desorption tower storing an adsorbent on an inside thereof and a second adsorption - desorption tower storing an adsorbent on an inside thereof,

discharging, at an ozone adsorption time, a gas which is discharged from the first adsorption - desorption tower, to an outside of the ozone supply apparatus, in a case where a concentration of oxygen discharged from the first adsorption - desorption tower is higher than a concentration of oxygen discharged from the second adsorption - desorption tower, and

controlling for discharging the gas discharged from the first adsorption - desorption tower, to an outside portion of the ozone supply apparatus, after passing the gas through the second adsorption - desorption tower, in a case where the concentration of oxygen discharged from the first adsorption - desorption tower is lower than the concentration of oxygen discharged from the second adsorption - desorption tower.

15. The ozone supply method according to claim 13 or 14,
wherein absorbed ozone is made to remain on the inside of the second adsorption - desorption tower, at an end time of ozone desorption, and an amount of ozone to be supplied is controlled.

FIG. 1

FIG. 2

EP 3 950 580 A1

FIG. 3

FIG. 4

EP 3 950 580 A1

FIG. 5

# FIG. 6

EP 3 950 580 A1

FIG. 7

EP 3 950 580 A1

FIG. 8

FIG. 9

FIG. 10

FIG. 11

FIG. 12

# FIG. 13

FIG. 14

INPUT    OUTPUT

**INTERNATIONAL SEARCH REPORT**

| International application No. |
| --- |
| PCT/JP2019/014057 |

A. CLASSIFICATION OF SUBJECT MATTER
Int. Cl. C01B13/10(2006.01)i

According to International Patent Classification (IPC) or to both national classification and IPC

B. FIELDS SEARCHED

Minimum documentation searched (classification system followed by classification symbols)
Int. Cl. C01B13/10

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2009/069772 A1 (MITSUBISHI ELECTRIC CORP.) 04 June 2009, claims, paragraphs [0014]-[0027], fig. | 1, 2, 4-6, 8, 12 |
| A | 1 & US 2010/0266463 A1, claims, paragraphs [0021]-[0033], fig. 1 & KR 10-2010-0087194 A & CN 101878182 A | 3, 7, 9-11, 13-15 |
| A | JP 2009-215164 A (MITSUBISHI ELECTRIC CORP.) 24 September 2009, claims, reference example 12, fig. 25 (Family: none) | 1-15 |
| A | US 2018/0065079 A1 (FITCH, Frank R.) 08 March 2018, claims, fig. 1, paragraphs [0037]-[0046] & WO 2018/111308 A1 & WO 2017/044684 A1 & AR 107230 A | 1-15 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14.06.2019 | Date of mailing of the international search report<br>25.06.2019 |
| --- | --- |
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/014057 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | CN 207591553 U (BEIJING PEKING UNIV PIONEER TECHNOLOGY CO LTD.) 10 July 2018, claims, paragraphs [0028]-[0045], fig. 1 (Family: none) | 1-15 |
| A | JP 11-43308 A (MITSUBISHI ELECTRIC CORP.) 16 February 1999, claims, fig. 13-24 & US 6214298 B1, claims, fig. 13-24 & EP 893401 A1 & EP 1253109 A2 & DE 69834526 T2 & CA 2242827 A1 | 1-15 |
| A | JP 11-43309 A (MITSUBISHI ELECTRIC CORP.) 16 February 1999, claims, fig. 1-8 & US 6054102 A, claims, fig. 1-8 & EP 893404 A1 & DE 69802749 T2 & CA 2349514 A1 & CA 2243008 A1 | 1-15 |
| A | JP 50-116390 A (NIPPON SANSO KK) 11 September 1975, claims, fig. 5 (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H09235104 A